# EUROPEAN PATENT APPLICATION

(11) **EP 4 607 692 A1**
(43) Date of publication of application: **27.08.2025**
(21) Application number: 24196501.1
(22) Date of filing: 26.08.2024
(51) Int. Cl.: H01M 50/627, H01M 50/103, H01M 50/15, H01M 50/645

(54) **ELECTROLYTE INJECTION APPARATUS, SECONDARY BATTERY INCLUDING ELECTROLYTE INJECTION APPARATUS, AND METHOD OF MANUFACTURING SECONDARY BATTERY**

(30) Priority: 22.02.2024 KR 20240026085
(71) Applicant: SAMSUNG SDI CO., LTD., Giheung-gu Yongin-si, Gyeonggi-do 17084 (KR)
(72) Inventor: Baek, Soomin, 17084 Yongin-si, Gyeonggi-do (KR); Shin, Hojun, 17084 Yongin-si, Gyeonggi-do (KR); Kim, Sangwon, 17084 Yongin-si, Gyeonggi-do (KR); Jung, Yeonho, 17084 Yongin-si, Gyeonggi-do (KR); Kwon, Soobin, 17084 Yongin-si, Gyeonggi-do (KR); Kwak, Yechan, 17084 Yongin-si, Gyeonggi-do (KR)
(74) Representative: Gulde & Partner

(57) **Abstract**

An electrolyte injection apparatus at an electrolyte injection hole of a secondary battery is configured to inject an electrolyte into the secondary battery or release a gas within the secondary battery, and includes a self-healing material in which a pore autonomously disappears when the pore is generated.

## Description

### BACKGROUND

### 1. Technical Field

Aspects of the present disclosure relate to a secondary battery and a method of manufacturing the same.

### 2. Description of the Related Art

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage.

In general, the secondary battery includes an electrode assembly consisting of a positive electrode and a negative electrode, a case that accommodates the electrode assembly, a terminal part connected to the electrode assembly, a vent for discharging a gas generated within the case (i.e., degassing), etc.

The above information disclosed in this Background section is for enhancement of understanding of the background of the present disclosure, and therefore, it may contain information that does not constitute related (or prior) art.

### SUMMARY

A secondary battery may generate various gases in a process of being repeatedly charged and discharged. Accordingly, internal pressure of the secondary battery continues to increase. In the related art, when internal pressure reaches or exceeds a predetermined level, an event, such as a fire or venting, is prevented by using a metallic vent that is ruptured and opened in order to release a gas. However, as the capacity of a cell is gradually increased, there is a problem in that a technical difficulty and a danger of stability are increased because set pressure of the vent is increased. Accordingly, some embodiments of the present disclosure utilize an electrolyte injection structure that may periodically release a gas within a secondary battery and may be used as a passage for injecting an electrolyte.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

A first aspect of the present disclosure relates to an electrolyte injection apparatus for sealing an electrolyte injection hole of a secondary battery. The electrolyte injection apparatus includes a self-healing material configured to autonomously close a pore in the self-healing material after the pore was generated therein.

In some embodiments, the electrolyte injection apparatus preferably has a spherical shape or a quadrangular pole shape in a cross sectional view.

In some embodiments, the self-healing material preferably comprises or consist of a polymer selected from at least one of a group comprising: gelatin, polydisulfide, poly(ε-caprolactone), and shape memory polymer (SMP). Most preferably the self-healing material preferably may comprise or consist of a polymer selected from at least one of a group comprising: gelatin, polydisulfide and poly(ε-caprolactone).

In some embodiments, the electrolyte injection hole is formed in a cap plate at a top of the secondary battery.

In some embodiments, the electrolyte injection hole is formed at a bottom part of a case of the secondary battery.
A second aspect of the present disclosure relates to a secondary battery including: an electrode assembly, a case accommodating the electrode assembly, a cap plate connected to the case, wherein one of the case and cap plate having an electrolyte injection hole for injection of an electrolyte and an electrolyte injection apparatus disposed at the electrolyte injection hole and including a self-healing material configured to autonomously close a pore in the self-healing material after the pore was generated therein.

In some embodiments, the electrolyte injection apparatus has a spherical shape or a quadrangular pole shape in a cross sectional view.

In some embodiments, the electrolyte injection hole has a form in which the electrolyte injection hole includes an uneven part in a cross sectional view.

In some embodiments, the self-healing material comprises or consists of a polymer selected from at least one of the group comprising: gelatin, polydisulfide, poly(ε-caprolactone), and shape memory polymer (SMP). More preferred it may be selected from gelatin, polydisulfide and poly(ε-caprolactone). Most preferred the self-healing material may comprise or consist of at least one selected from poly(ε-caprolactone) and polydisulfide. Afore-mentioned polymers may be copolymers.

In some embodiments, the electrolyte injection hole is formed in the cap plate at a top of the secondary battery, and the electrolyte injection apparatus is disposed (e.g. installed) at the electrolyte injection hole formed in the cap plate.

In some embodiments, the electrolyte injection hole is formed at a bottom part of the case of the secondary battery, and the electrolyte injection apparatus is disposed (e.g. installed) at the electrolyte injection hole formed at the bottom part of the case.

In some embodiments, the secondary battery has a cylindrical shape.

In some embodiments, the secondary battery has a prismatic shape.

A further aspect of the present disclosure relates to a method of manufacturing a secondary battery, the method including: providing (e.g. manufacturing) an electrode assembly; providing (e.g. manufacturing) a case and accommodating the electrode assembly in the case; providing (e.g. manufacturing) a cap plate and connecting the cap plate to the case; forming an electrolyte injection hole in the case or the cap plate; and disposing (e.g. installing) an electrolyte injection apparatus at the electrolyte injection hole, wherein the electrolyte injection apparatus comprises a self-healing material configured to autonomously close a pore in the self-healing material after the pore was generated.

In some embodiments, the disposing of the electrolyte injection apparatus includes disposing the electrolyte injection apparatus by attaching the electrolyte injection apparatus to the electrolyte injection hole.

In some embodiments, the disposing of the electrolyte injection apparatus includes disposing the electrolyte injection apparatus by forming the electrolyte injection apparatus at the electrolyte injection hole through insert injection.

In some embodiments, the forming of the electrolyte injection hole includes forming the electrolyte injection hole in the cap plate, and the disposing of the electrolyte injection apparatus includes disposing the electrolyte injection apparatus at the electrolyte injection hole formed in the cap plate.

In some embodiments, the forming of the electrolyte injection hole includes forming the electrolyte injection hole at a bottom part of the case, and the disposing of the electrolyte injection apparatus includes disposing the electrolyte injection apparatus at the electrolyte injection hole formed at the bottom part of the case.

In some embodiments, the method further includes: injecting an electrolyte into the electrolyte injection hole by inserting a needle for injecting the electrolyte into the electrolyte injection hole. The needle may be removed afterwards.

According to some embodiments of the present disclosure, the secondary battery includes the electrolyte injection apparatus made of the self-healing material in which a pore autonomously disappears when a pore is generated. Accordingly, the electrolyte injection apparatus may be used to inject an electrolyte into the secondary battery right after the assembly of the secondary battery or to periodically release a gas that is generated in a degradation process within the secondary battery, by injecting the electrolyte into the secondary battery or discharging the gas within the secondary battery.

Furthermore, in a vehicle to which the secondary battery according to some embodiments of the present disclosure has been applied, a gas within the secondary battery can be prevented from being ignited and exploded or the occurrence of a fire in the secondary battery can be prevented or reduced. Accordingly, safety can be enhanced, property damage attributable to damage to the vehicle can be prevented, and the safety of a passenger can be improved.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a cross-sectional view of a cylindrical secondary battery according to some embodiments of the present disclosure;
FIG. 2A is a perspective view of an upper part of a prismatic secondary battery according to some embodiments of the present disclosure;
FIG. 2B is a cross-sectional view taken the along line I-I in FIG. 2A, according to some embodiments of the present disclosure;
FIG. 3A is a side cross-sectional view of a secondary battery including an electrolyte injection apparatus according to some embodiments of the present disclosure;
FIG. 3B is a plan view of the secondary battery including the electrolyte injection apparatus according to some embodiments of the present disclosure;
FIGS. 4A to 4D are diagrams for illustrating a process of injecting an electrolyte or discharging a gas through the electrolyte injection apparatus in the secondary battery including the electrolyte injection apparatus, according to some embodiments of the present disclosure;
FIGS. 5A to 5D illustrate examples of a form of an electrolyte injection hole and electrolyte injection apparatus of the secondary battery including the electrolyte injection apparatus, according to some embodiments of the present disclosure;
FIG. 6 is a diagram illustrating another implementation example of a secondary battery including the electrolyte injection apparatus, according to some embodiments of the present disclosure;
FIG. 7 is an perspective view of a secondary battery module in which secondary batteries have been arranged according to some embodiments of the present disclosure;
FIG. 8 is an exemplary diagram of a secondary battery pack including the secondary battery module illustrated in FIG. 7, according to some embodiments of the present disclosure; and
FIG. 9 is a conceptual view of a vehicle including the secondary battery pack illustrated in FIG. 8, according to some embodiments of the present disclosure.
FIG. 10 is a flow diagram illustrating a process of manufacturing a secondary battery, according to some embodiments of the present disclosure.

### DETAILED DESCRIPTION

Hereinafter, some embodiments of the present disclosure will be described with reference to the accompanying drawings. Unless otherwise defined, all terms (including technical and scientific terms) used herein have the same meaning as commonly understood by one of ordinary skill in the art to which the present inventive concept belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

The embodiments described in this specification and the configurations shown in the drawings are only some of the embodiments of the present disclosure and do not represent all of the aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

The type of secondary battery includes a coin type, a cylindrical type, a prismatic type, and a pouch type. Prior to a description of embodiments of the present disclosure, first, cylindrical and prismatic secondary batteries are roughly described because the present disclosure may be basically applied to the cylindrical and prismatic secondary batteries.

An electrolyte injection apparatus according to an embodiment of the present disclosure may be installed at an electrolyte injection hole of a secondary battery, configured to inject an electrolyte into the secondary battery or release a gas within the secondary battery, and made of a self-healing material in which a pore autonomously disappears when the pore is generated.

Preferably, the electrolyte injection apparatus has a spherical shape or a quadrangular pole shape on a basis of a cross section of the electrolyte injection apparatus.

Further preferred, the self-healing material may comprise one selected from one or more materials, among gelatin, shape memory polymer (SMP), poly(e-caprolactone), and polydisulfide, or a compound of them.

Further preferred, the electrolyte injection apparatus is installed at an electrolyte injection hole formed in a cap plate at a top of the secondary battery.

Further preferred, the electrolyte injection apparatus is installed at an electrolyte injection hole formed at a bottom of a case of the secondary battery.

Furthermore, a secondary battery according to another embodiment of the present disclosure may comprise an electrolyte injection hole into which an electrolyte is injected; and an electrolyte injection apparatus installed at the electrolyte injection hole, configured to inject the electrolyte into the secondary battery or release a gas within the secondary battery, and made of a self-healing material in which a pore autonomously disappears when the pore is generated.

Preferably, the electrolyte injection apparatus may have a spherical shape or a quadrangular pole shape on a basis of a cross section of the electrolyte injection apparatus.

Preferably, the electrolyte injection hole may have a form in which the electrolyte injection hole comprises an uneven part on a basis of a cross section of the electrolyte injection apparatus.

Probably, the self-healing material may comprise one selected from one or more materials, among gelatin, shape memory polymer (SMP), poly(e-caprolactone), and polydisulfide, or a compound of them.

According to a preferred embodiment of the disclosure, the electrolyte injection hole may be formed in a cap plate at a top of the secondary battery, and the electrolyte injection apparatus may be installed at an electrolyte injection hole formed in the cap plate.

According to another preferred embodiment of the disclosure, the electrolyte injection hole is formed at a bottom part of a case of the secondary battery, and the electrolyte injection apparatus is installed at an electrolyte injection hole formed at a bottom of the case.

Preferably the secondary battery may have a cylindrical shape.

Preferably, the secondary battery may have a prismatic shape.

Furthermore, a method of manufacturing a secondary battery, according to still another embodiment of the present disclosure may comprise: manufacturing an electrode assembly; manufacturing a case that accommodates the electrode assembly; manufacturing a cap plate connected to the case; forming an electrolyte injection hole in the case or the cap plate; and installing an electrolyte injection apparatus at the electrolyte injection hole.

Preferably, the installing of the electrolyte injection apparatus may comprise installing the electrolyte injection apparatus by attaching the electrolyte injection apparatus to the electrolyte injection hole.

Preferably, the installing of the electrolyte injection apparatus may comprise installing the electrolyte injection apparatus by forming the electrolyte injection apparatus at the electrolyte injection hole through insert injection.

Preferably, the forming of the electrolyte injection hole may comprise forming the electrolyte injection hole in the cap plate, and the installing of the electrolyte injection apparatus may comprise installing the electrolyte injection apparatus at the electrolyte injection hole formed in the cap plate.

Further preferred, the forming of the electrolyte injection hole may comprise forming the electrolyte injection hole at a bottom of the case, and the installing of the electrolyte injection apparatus comprises installing the electrolyte injection apparatus at the electrolyte injection hole formed at the bottom of the case.
Preferably the method may further comprise injecting an electrolyte into the electrolyte injection hole by inserting a need for injecting the electrolyte into the electrolyte injection hole.

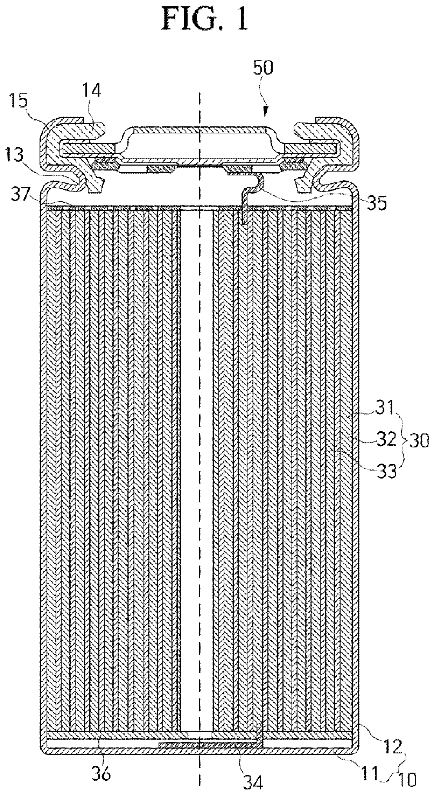

FIG. 1 is a cross-sectional view of a cylindrical secondary battery, according to some embodiments of the present disclosure. The cylindrical secondary battery may include an electrode assembly 30, a case 10 that accommodates the electrode assembly 30 and an electrolyte therein, a cap assembly 50 that is connected to an opening of the case 10 and that seals the case 10, and an insulating plate 37 disposed between the electrode assembly 30 and the cap assembly 50 within the case 10.

The electrode assembly 30 may include a separator 32, a first electrode 33, and the second electrode 31 with the separator 32 interposed between the first and second electrodes 33 and 31, and may be wound in a jelly-roll form.

The first electrode 33 may include a first base and a first active material layer disposed in the first base. A first lead tap 35 may be extended from a first uncoated part that belongs to the first base and in which the first active material layer is not exposed to the outside. The first lead tap 35 may be electrically connected to the cap assembly 50.

The second electrode 31 may include a second base and a second active material layer disposed in the second base. A second lead tap 34 may be extended from a second uncoated part that belongs to the second base and in which the second active material layer is not exposed to the outside. The second lead tap 34 may be electrically connected to the case 10. The first lead tap 35 and the second lead tap 34 may extend in opposite directions.

The first electrode 33 may function as a positive electrode. In this case, the first base may be composed of aluminum foil and/or the like. The first active material layer may include transition metal oxide and/or the like. The second electrode 31 may function as a negative electrode. In this case, the second base may be composed of copper foil, nickel foil and/or the like. The second active material layer may include graphite and/or the like.

The separator 32 functions to permit a movement of lithium ions and to prevent or to substantially reduce the likelihood of the short-circuit of the first electrode 33 and the second electrode 31. The separator 32 may be composed of a polyethylene film, a polypropylene film, a polyethylene-polypropylene film, and/or the like. The case 10 may accommodate the electrode assembly 30 and an electrolyte, and forms an external form of the battery along with the cap assembly 50. The case 10 may include a body part 12 having an approximate cylindrical shape and a bottom part 11 connected to one side of the body part 12. A beading part 13 that has been deformed toward the inside of the body part 12 may be disposed in the body part 12. A crimping part 15 that has been bent toward the inside of the body part 12 may be disposed at an end of the body part 12 on the opening side.

The beading part 13 may suppress a movement of the electrode assembly 30 within the case 10, and may facilitate the settlement of a gasket 14 and the cap assembly 50. The crimping part 15 may firmly fix the cap assembly 50 by pressurizing an edge of the cap assembly 50 through the gasket 14. The case 10 may be made of iron plated with nickel and/or the like.

The cap assembly 50 may seal the case 10 by being fixed to the inside of the crimping part 15 through the gasket 14. The cap assembly 50 may include a cap-up part, a safety vent, a cap-down part, an insulating member, and a sub-plate, but the present disclosure is not limited to such examples. The cap assembly 50 may be variously deformed in a suitable manner.

The cap-up part may be disposed at the top of the cap assembly 50. The cap-up part may include a terminal part that upward convexly protrudes and that is connected to an external circuit. An output for discharging a gas around the terminal part may be disposed in the cap-up part.

The safety vent may be disposed under the cap-up part. The safety vent may include a protruding part that downward convexly protrudes and that is connected to the sub-plate, and at least one notch disposed around the protruding part.

When a gas is generated due to over-charging or an abnormal operation of the secondary battery, the protruding part may be upward deformed by the pressure of the gas and separated from the sub-plate. Furthermore, the safety vent may be cut along the notch. The cut safety vent can prevent or to substantially reduce the likelihood of the explosion of the secondary battery by discharging the gas to the outside.

The cap-down part may be disposed under the safety vent. A first opening for exposing the protruding part of the safety vent and a second opening for discharging a gas may be disposed in the cap-down part. The insulating member may be disposed between the safety vent and the cap-down part, and may insulate the safety vent and the cap-down part.

The sub-plate may be disposed under the cap-down part. The sub-plate may be fixed to the bottom of the cap-down part in order to close the first opening of the cap-down part. The protruding part of the safety vent may be fixed to the sub-plate. The first lead tap 35 that has been withdrawn (e.g., extended) from the electrode assembly 30 may be fixed to the sub-plate. Accordingly, the cap-up part, the safety vent, the cap-down part, and the sub-plate may be electrically connected to the first electrode 33 of the electrode assembly 30.

The insulating plate 37 may be disposed to adjoin the electrode assembly 30 under the beading part 13. A tap opening for withdrawing the first lead tap 35 may be provided in the insulating plate 37. The cap assembly 50 that has been electrically connected to the first electrode 33 by the first lead tap 35 may face the electrode assembly 30 with the insulating plate 37 interposed therebetween. The cap assembly 50 may maintain the state in which the cap assembly 50 has been insulated from the electrode assembly 30 by the insulating plate 37. The cylindrical secondary battery may include another insulating plate 36 for insulation between the electrode assembly 30 and the bottom part 11 of the case 10.

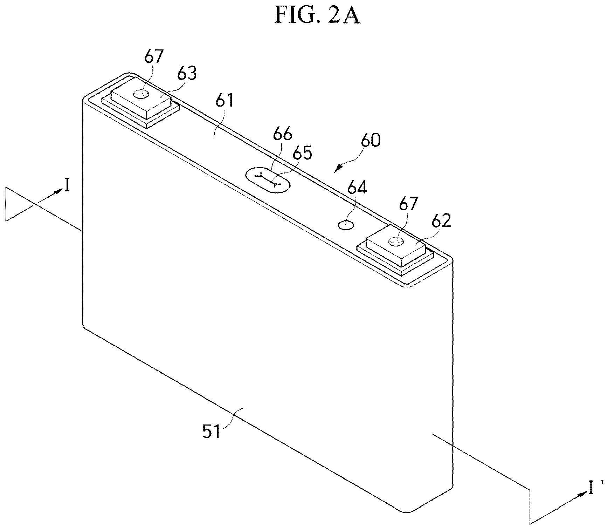

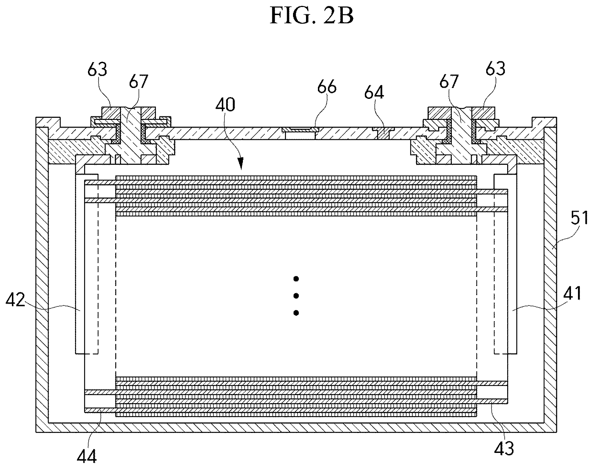

FIG. 2A is a top perspective view of a prismatic secondary battery according to some embodiments of the present disclosure. FIG. 2B is a cross-sectional view taken along the line I-I' of FIG. 2A, according to some embodiments of the present disclosure.

First, the external appearance of the prismatic secondary battery illustrated in FIG. 2A will be described.

A case 51 defines an overall appearance of the prismatic secondary battery, and may be made of a conductive metal, such as aluminum, aluminum alloy, nickel-plated steel, and/or the like. In addition, the case 51 may provide a space for accommodating an electrode assembly therein.

A cap assembly 60 may include a cap plate 61 that covers the opening of the case 51. In some examples, the case 51 and the cap plate 61 may be made of a conductive material. Here, a first terminal 63 and a second terminal 62 may be electrically connected to respective positive and negative (or negative and positive) electrodes inside the case, and may be installed to protrude outward through the cap plate 61.

The cap plate 61 may be equipped with an electrolyte injection port 64 formed to install a sealing plug (or seal pin), and a vent 66 formed with a notch 65. The vent 66 is for discharging gas generated inside the secondary battery.

With reference to FIG. 2B, the internal structure of the prismatic secondary battery and the coupling structure with the cap assembly 60 will be further described.

As shown in FIG. 2B, a prismatic secondary battery may include an electrode assembly 40, a first current collector 41, a first terminal 62, a second current collector 42, a second terminal 63, a case 51, and a cap assembly 60.

An electrode assembly 40 may be formed by winding or stacking a stack of a first electrode plate, a separator, and a second electrode plate, which are formed as thin plates or films. When the electrode assembly 40 is a wound stack, a winding axis may be parallel to the longitudinal direction (e.g., the y direction) of the case 51. In some other embodiments, the electrode assembly 40 is a stack type rather than a winding type, and the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, when the first electrode plate is manufactured, the first electrode tab 43 is formed by being cut in advance to protrude to one side of the electrode assembly 40, or the first electrode tab 43 protrudes to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In some embodiments, the first electrode tab 43 is located on the left side of the electrode assembly 40, and the second electrode tab 44 may be located on the right side of the electrode assembly 40. In some other embodiments, the first electrode tab 43 and the second electrode tab 44 are located on one side of the electrode assembly 40 in the same direction. Here, for convenience of description, the left and right sides are defined according to the secondary battery as oriented in FIG. 1, and the positions thereof may change when the secondary battery is rotated left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, and/or the like.

The first electrode tab 43 of the first electrode plate and the second electrode tab 44 of the second electrode plate may be positioned at both ends (e.g., opposite ends) of the electrode assembly 40. In some embodiments, the electrode assembly 40 is accommodated in the case 10 along with an electrolyte.

In addition, in the electrode assembly 40, the first current collector 41 and the second current collector 42 may be welded and connected to the first electrode tab 43 of the first electrode plate and the second electrode tab 44 of the second electrode plate exposed on both sides, respectively, to then be positioned thereat, respectively.

The first current collection part 41 and the second current collection part 42 may be connected to the first terminal 62 and the second terminal 63 described with reference to FIG. 2A, through terminal pins 67, respectively. In some embodiments, outer circumference surfaces of the terminal pins 67 may be subjected to screw processing, and may be fastened to the first terminal 62 and the second terminal 63, respectively, through screw coupling. However, the present disclosure is not limited to such an example, and the terminal pins 67 may be connected to the first terminal 62 and the second terminal 63 through riveting way or by welding.

In the cylindrical and prismatic secondary batteries described with reference to FIGS. 1, 2A, and 2B, the vent part for the release of a gas or the electrolyte injection hole for injecting an electrolyte has been illustrated as being installed in the cap assembly 50/60. However, in some other embodiments, the vent part may be installed at an opposite location that faces the cap assembly 50/60.

Hereinafter, for convenience of understanding, a location at which the cap assembly 50/60 is disposed is called an "upper side", and a location that is opposite to the upper side and that faces the cap assembly 50/60 is called a "lower side".

Hereinafter, embodiments of a secondary battery including an electrolyte injection apparatus according to some embodiments of the present disclosure are described.

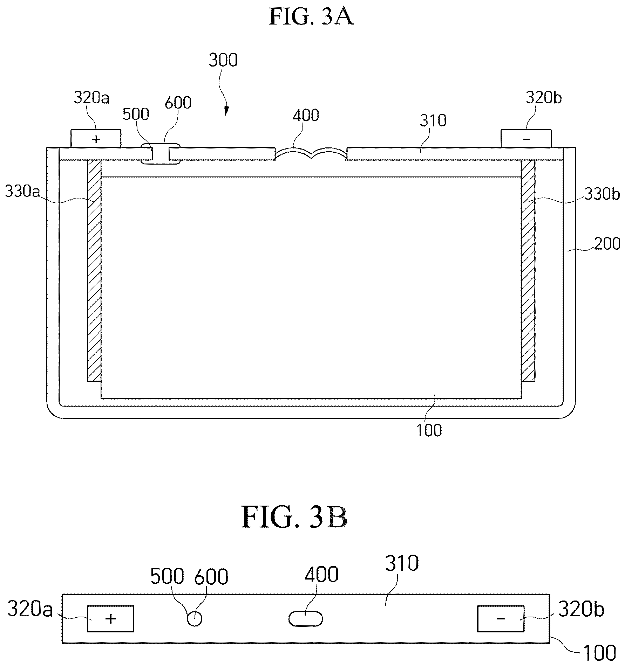

FIG. 3A is a side cross-sectional view of a secondary battery including an electrolyte injection apparatus according to some embodiments of the present disclosure. FIG. 3B is a plan view of the secondary battery including the electrolyte injection apparatus according to some embodiments of the present disclosure.

Referring to FIGS. 3A and 3B, the secondary battery may include an electrode assembly 100, a case 200 that accommodates the electrode assembly 100, and a cap assembly 300 connected to the case 200.

The cap assembly 300 may include a cap plate 310 connected to the case 200, a first terminal 320a, a second terminal 320b, a first current collection part 330a, and a second current collection part 330b. The first current collection part 330a and the second current collection part 330b function to connect the first terminal 320a and the second terminal 320b, respectively, to the electrode assembly 100.

The cap plate 310 may have an approximately rectangular plate form. The cap plate 310 may be made of the same material as the case 200. The cap plate 310 may have a size corresponding to the size of the inside of an opening of the case 200. Furthermore, illustratively, the cap plate 310 may be connected to the case 200 by a method, such as laser welding. A terminal hole and a groove for a connection with each of the first terminal 320a and the second terminal 320b and a vent hole for a connection with a vent may be formed in the cap plate 310. Furthermore, the cap plate 310 may include a vent 400 configured to be ruptured by a gas within the secondary battery. The vent 400 may be made of a metallic material, and may be attached to the vent hole formed in the cap plate 310 by welding.

In the related art, a vent, a gas within the secondary battery may not be released until specific internal pressure within the secondary battery is reached. When an event, such as a fire or venting, occurs, the internal gas may be explosively ignited. Furthermore, the expansion of the secondary battery or the degradation of an electrode plate attributable to an increase of pressure within the secondary battery may occur.

A secondary battery of the related art includes an electrolyte injection hole 500. After an electrolyte is injected into the electrode assembly 100 through the electrolyte injection hole 500, the electrolyte injection hole may be sealed by a stopper.

In the secondary battery according to some embodiments of the present disclosure, an electrolyte injection apparatus 600 may be installed at the electrolyte injection hole 500 through which an electrolyte is injected. The electrolyte injection apparatus 600 may be used to inject an electrolyte into a secondary battery when the secondary battery is manufactured, and may be used to release a gas within a secondary battery after the secondary battery is manufactured.

The electrolyte injection apparatus 600 may comprise or may consist of a self-healing material. The self-healing material may comprise or consist of a polymer material. Said polymer material is preferably an elastomer. The self-healing material may have a self-healing characteristic in which a pore autonomously disappears, although a pore is generated due to the penetration of an external structure having a pointed form. For example, the self-healing material may comprise or may consist of a polymer selected from at least one of the group comprising: gelatin, shape memory polymer (SMP), poly(ε-caprolactone), and polydisulfide. Preferably, the self-healing material may comprise or consist of at least one selected from the group of gelatin, poly(ε-caprolactone) and polydisulfide. Most preferred the self-healing material may comprise or consist of at least one selected from poly(ε-caprolactone) and polydisulfide. Afore-mentioned polymers may be copolymers.

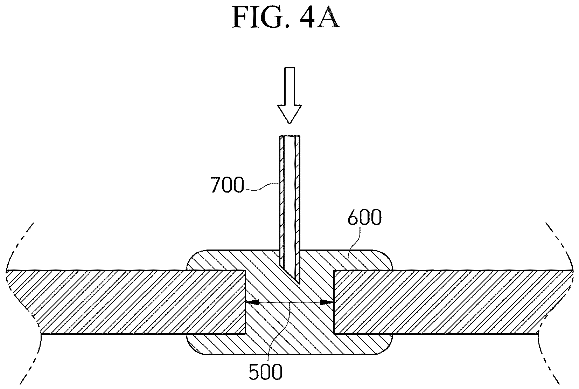

Hereinafter, a process of injecting an electrolyte or discharging a gas through the electrolyte injection apparatus 600 is described with reference to FIGS. 4A to 4D.

FIGS. 4A to 4D are diagrams for illustrating a process of injecting an electrolyte or discharging a gas through the electrolyte injection apparatus in the secondary battery including the electrolyte injection apparatus, according to some embodiments of the present disclosure.

Referring to FIG. 4A, a needle 700 for injecting an electrolyte or discharging a gas may be inserted into the electrolyte injection apparatus 600. The needle 700 may be connected to electrolyte injection equipment or gas absorption equipment. In this case, the diameter of the needle 700 may be 1/4 to 3/4 of the diameter of the electrolyte injection hole 500. If the diameter of the needle 700 is less than 1/4 of the diameter of the electrolyte injection hole 500, a process cost may be increased because the amount of liquid injected or the amount of gas release is slight. If the diameter of the needle 700 is more than 3/4 of the diameter of the electrolyte injection hole 500, it may be difficult for a pore to disappear by the self-healing characteristic of the electrolyte injection apparatus 600.

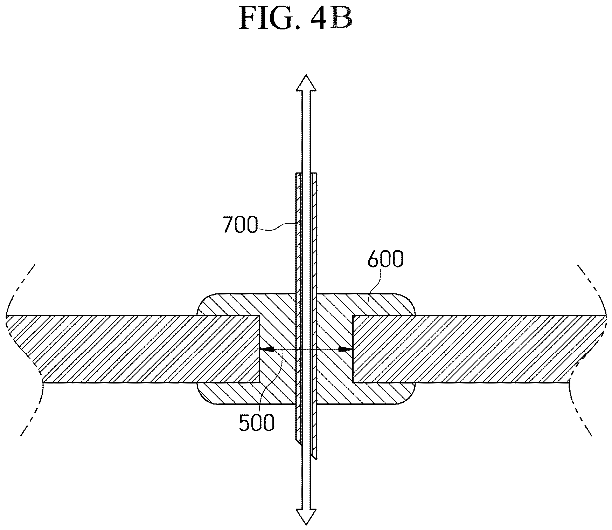

Referring to FIG. 4B, when the needle 700 is fully inserted into the electrolyte injection apparatus 600 through the electrolyte injection apparatus 600, the electrolyte injection equipment may inject an electrolyte into the secondary battery through the needle 700 or the gas absorption equipment may release a gas within the secondary battery through the needle 700.

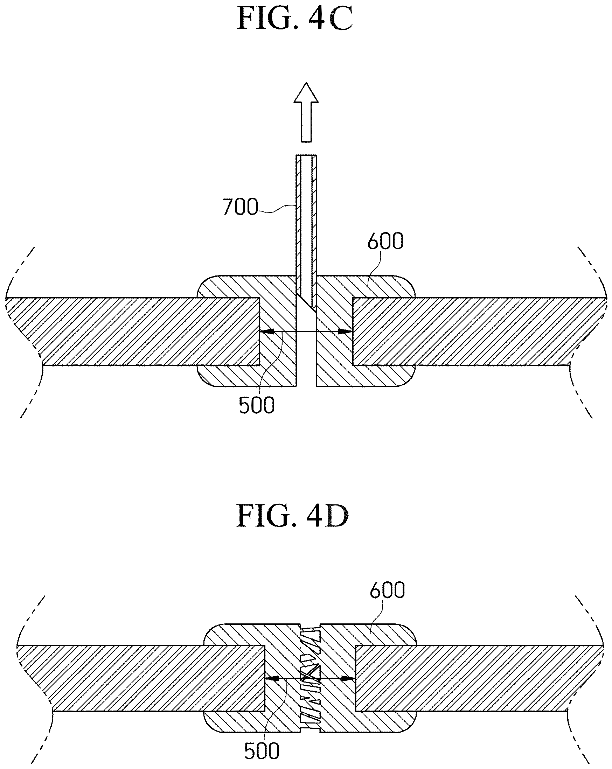

Referring to FIG. 4C, after the injection of the electrolyte or the release of the gas is completed, the needle 700 is removed from the electrolyte injection apparatus 600.

Referring to FIG. 4D, a pore that remains after the needle 700 is removed disappears by the self-healing characteristic of the electrolyte injection apparatus 600. As a result, the pore may disappear, so that the secondary battery may be sealed again.

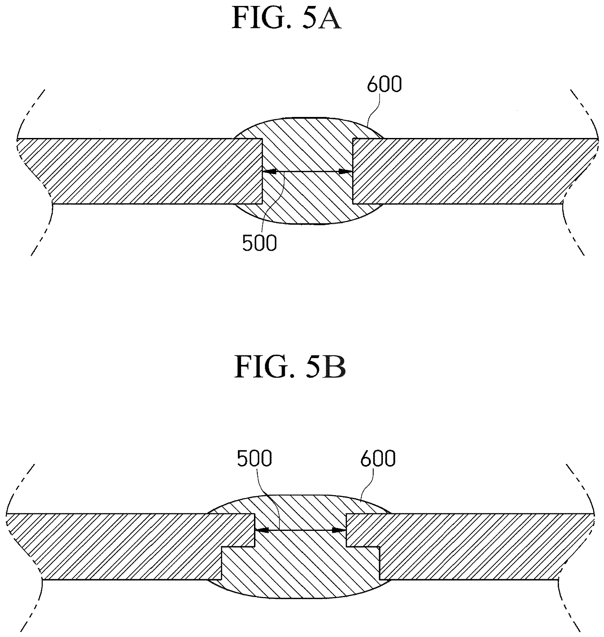

Hereinafter, examples of a form of the electrolyte injection hole 500 and the electrolyte injection apparatus 600 are described with reference to FIGS. 5A to 5D.

FIGS. 5A to 5D illustrate examples of a form of the electrolyte injection hole and electrolyte injection apparatus of the secondary battery including the electrolyte injection apparatus, according to some embodiments of the present disclosure.

The electrolyte injection apparatus 600 of the secondary battery including the electrolyte injection apparatus according to some embodiments of the present disclosure may have a form of a spherical shape in a cross-sectional view as illustrated in FIGS. 5A and 5B. Such a form of the spherical shape may be naturally formed when the self-healing material that constitutes the electrolyte injection apparatus 600 is installed at the electrolyte injection hole 500 through insert injection. In this case, the form of the spherical shape may not be a form of a complete spherical shape, but may be a form of an elongated spherical or elliptic shape.

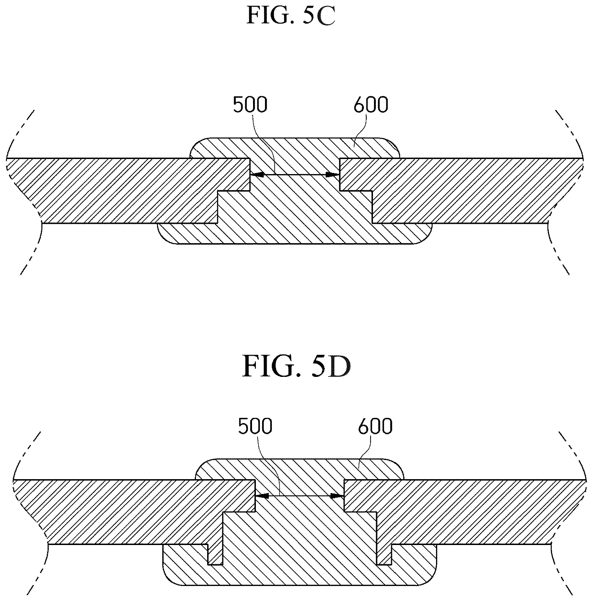

Furthermore, the electrolyte injection apparatus 600 of the secondary battery including the electrolyte injection apparatus according to some embodiments of the present disclosure may have a quadrangular pole shape in a cross-sectional view as illustrated in FIGS. 5C and 5D. In this case, a form of a cross section of the quadrangular pole shape may be a quadrangle in which a side on the inner side of the secondary battery is longer than a side on the outside of the secondary battery. Accordingly, the electrolyte injection apparatus 600 can be prevented from being detached due to pressure when a gas within the secondary battery is released, or the likelihood thereof may be substantially reduced.

Furthermore, the electrolyte injection hole 500 at which the electrolyte injection apparatus 600 of the secondary battery including the electrolyte injection apparatus according to some embodiments of the present disclosure has been installed may have a form in which the electrolyte injection hole 500 includes an uneven part in a cross-sectional view. Accordingly, even when pressure from a gas within the secondary battery being released is high, the electrolyte injection apparatus 600 can be prevented from being detached, or the likelihood thereof may be substantially reduced, because the uneven part holds the electrolyte injection apparatus 600.

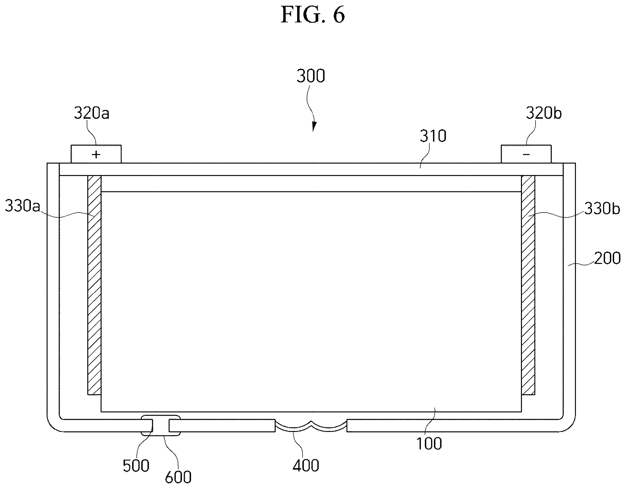

FIG. 6 is a diagram illustrating another implementation example of a secondary battery including the electrolyte injection apparatus according to some embodiments of the present disclosure.

As described with reference to FIGS. 3A and 3B, in the secondary battery according to some embodiments of the present disclosure, the electrolyte injection hole 500 may be formed in the cap plate 310 at the top of the secondary battery, and the electrolyte injection apparatus 600 may be installed at the electrolyte injection hole 500 formed in the cap plate 310.

However, in the secondary battery according to some embodiments of the present disclosure, as illustrated in FIG. 6, the electrolyte injection hole 500 may be formed at the bottom of the case 200 of the secondary battery, and the electrolyte injection apparatus 600 may be installed at the electrolyte injection hole 500 formed at the bottom of the case 200. Furthermore, likewise, the vent 400 may also be formed at the bottom of the case 200 of the secondary battery.

If the vent 400, electrolyte injection hole 500, and electrolyte injection apparatus 600 of the secondary battery are formed at the bottom of the case 200 as described above, when the secondary battery is used for a hybrid or electric vehicle, safety in terms of a passenger and an environment can be secured because a gas within the secondary battery can be released under the vehicle, that is, toward the ground.

A method of manufacturing a secondary battery including the electrolyte injection apparatus 600 having a structure, such as the structure described above, is described.

According to some embodiments of the method of manufacturing a secondary battery, the electrode assembly 100 may be manufactured. The case 200 that accommodates the electrode assembly 100 may be manufactured. The cap plate 310 connected to the case 200 may be manufactured.

Furthermore, the electrolyte injection hole 500 may be formed in the case 200 or the cap plate 310. The electrolyte injection apparatus 600 may be installed at the electrolyte injection hole 500.

When the electrolyte injection hole 500 is formed in the cap plate 310, the electrolyte injection apparatus 600 may be installed at the electrolyte injection hole 500 formed in the cap plate 310.

In some examples, when the electrolyte injection hole 500 is formed at the bottom of the case 200, the electrolyte injection apparatus 600 may be installed at the electrolyte injection hole 500 formed at the bottom of the case 200.

The installation of the electrolyte injection apparatus 600 may be performed by attaching the electrolyte injection apparatus 600 to the electrolyte injection hole 500 or forming the electrolyte injection apparatus 600 in the electrolyte injection hole 500 through insert injection.

After the electrolyte injection apparatus 600 is installed at the electrolyte injection hole 500 as described above, an electrolyte may be injected by inserting the needle for injecting an electrolyte into the electrolyte injection hole 500. In this case, the diameter of the needle 700 may be 1/4 to 3/4 of the diameter of the electrolyte injection hole 500. If the diameter of the needle 700 is less than 1/4 of the diameter of the electrolyte injection hole 500, a process cost may be increased because the amount of liquid injected or the amount of gas release is slight. If the diameter of the needle 700 is more than 3/4 of the diameter of the electrolyte injection hole 500, it may be difficult for a pore to disappear by the self-healing characteristic of the electrolyte injection apparatus 600.

Hereinafter, materials which may be used in a secondary battery according to some embodiments of the present disclosure are described.

A compound (e.g., a lithiated intercalation compound) capable of reversible intercalation and deintercalation of lithium may be used as a positive electrode active material. For example, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}O_{α} (0.90≤a≤1.8, 0≤b≤0.5, 0≤c≤0.5, 0<a<2); LiₐNi_{1-b-c}Mn_{b}X_{c}O_{2-α}O_{α} (0.90≤a≤1.8, 0≤b≤0.5, 0≤c≤0.5, 0<a<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄₎₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

AI may be used as the current collector, but the present disclosure may not be limited thereto.

A negative electrode active material may include a material capable of reversible intercalation/de-intercalation with respect to lithium ions, lithium metal, an alloy of lithium metal, a material capable of doping and dedoping with respect to lithium, or transition metal oxide.

The material capable of reversible intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, fired coke, and/or the like.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to some implementation examples, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include the negative electrode active material of 90 wt.% to 99 wt.%, the binder of 0.5 wt.% to 5 wt.%, and the conductive material of 0 wt.% to 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride-based heavy antibody or (meth)acrylic polymer, and/or the like.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked.

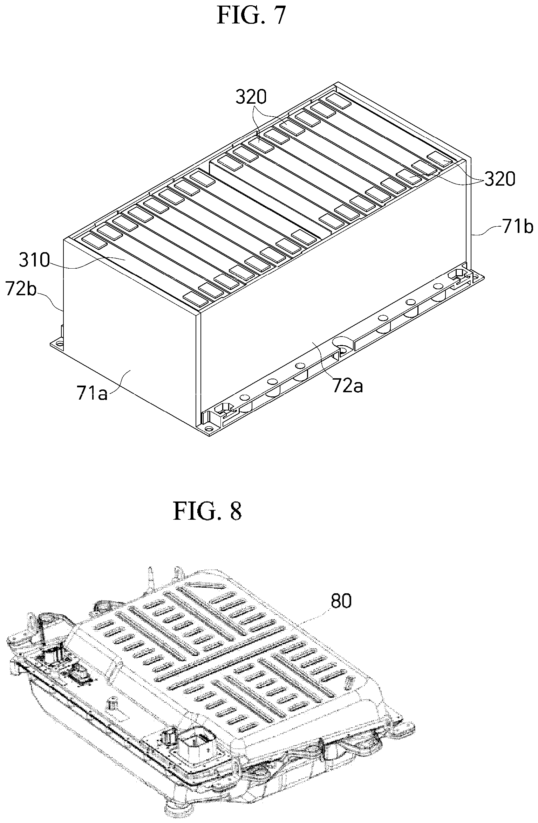

FIG. 7 is a perspective view of a secondary battery module in which the secondary batteries illustrated in FIGS. 3A and 6 according to some embodiments of the present disclosure have been arranged. The secondary battery module may be manufactured by arranging and connecting multiple secondary battery cells laterally and/or longitudinally as the capacity of a secondary battery for driving an electric vehicle is increased.

Multiple secondary batteries may be arranged in a space that is formed by a pair of end plates 71a and 71b that face each other and a pair of side plates 72a and 72b that face each other. A direction in which the secondary batteries are arranged and the number of secondary batteries may be designed so that desired voltage and current specifications are obtained.

FIG. 8 is an exemplary diagram of a secondary battery pack 80 that has been constructed to apply the secondary battery module illustrated in FIG. 7 to a consumer product (e.g., a vehicle), according to some embodiments of the present disclosure.

The secondary battery pack may be manufactured by embedding multiple secondary battery modules in a pack housing having a form designed to mount the secondary battery pack on an actual product. The pack housing may include a fastening part that is utilized for the mounting of the secondary battery pack on the product and an electricity withdrawing part. Related elements, such as a bus bar for an electrical connection of secondary batteries, a cooling unit, and an external terminal, are not illustrated in FIG. 7, for convenience sake.

The secondary battery pack may be mounted on a vehicle. The vehicle may be an electric vehicle, a hybrid vehicle, or a plug-in hybrid vehicle, for example. The vehicle may include a four-wheel or two-wheel drive vehicle.

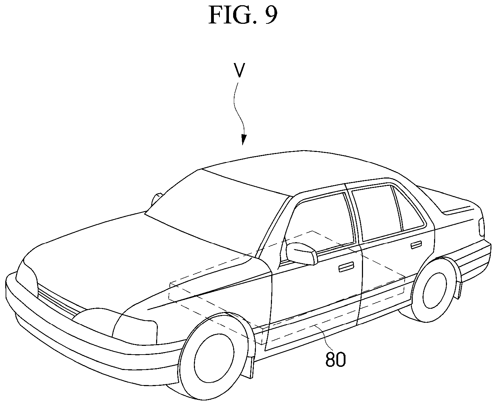

FIG. 9 is a diagram for describing a vehicle including the secondary battery pack illustrated in FIG. 8, according to some embodiments of the present disclosure. FIG. 9 illustrates that the secondary battery pack 80 according to some embodiments of the present disclosure has been mounted on a lower part of the body of a vehicle V. The vehicle V may operate by being supplied with power from the secondary battery pack 80 according to some embodiments of the present disclosure.

FIG. 10 is a flow diagram illustrating a process of manufacturing a secondary battery, according to some embodiments of the present disclosure.

In some embodiments, the method includes manufacturing an electrode assembly (S100), manufacturing a case configured to accommodate the electrode assembly (S200), manufacturing a cap plate connected to the case (S300), forming an electrolyte injection hole in the case or the cap plate (S400), installing an electrolyte injection apparatus at the electrolyte injection hole (S500), and injecting an electrolyte into the electrolyte injection hole by inserting a needle for injecting the electrolyte into the electrolyte injection hole (S600).

In some examples, the installing of the electrolyte injection apparatus includes installing the electrolyte injection apparatus by attaching the electrolyte injection apparatus to the electrolyte injection hole or by forming the electrolyte injection apparatus at the electrolyte injection hole through insert injection.

In some examples, the forming of the electrolyte injection hole includes forming the electrolyte injection hole in the cap plate, and the installing of the electrolyte injection apparatus includes installing the electrolyte injection apparatus at the electrolyte injection hole formed in the cap plate.

In some other examples, the forming of the electrolyte injection hole includes forming the electrolyte injection hole at a bottom of the case, and the installing of the electrolyte injection apparatus includes installing the electrolyte injection apparatus at the electrolyte injection hole formed at the bottom of the case.

Although the present disclosure has been described above in connection with the limited embodiments and drawings, the present disclosure is not limited to the embodiments. A person having ordinary knowledge in the art to which the present disclosure pertains may modify and change the present disclosure within the scope of the present disclosure as defined by the following claims and equivalents thereof.

### List of reference signs

10: case
11: bottom part
12: body part
13: beading part
14: gasket
15: crimping part
30: electrode assembly
31: second electrode
32: separator
33: first electrode
34: second lead tap
35: first lead tap
36: insulating plate
37: insulating plate
40: electrode assembly
41: first current collection part
42: second current collection part
43: first electrode tap
44: second electrode tap(second uncoated part)
50: cap assembly
51: case
60: cap assembly
61: cap plate
62: first terminal
63: second terminal
64: electrolyte injection hole
65: notch
66: vent
67: connection pole
71a, 71b: end plate
72a, 72b: side plate
80: secondary battery pack
100: electrode assembly
200: case
300: cap assembly
310: cap plate
320a: first terminal part
320b: second terminal part
330a: first current collection part
330b: second current collection part
400: vent
500: electrolyte injection hole
600: electrolyte injection apparatus

## Claims

1. An electrolyte injection apparatus (600) for sealing an electrolyte injection hole of a secondary battery, comprising:
a self-healing material configured to autonomously close a pore in the self-healing material after the pore was generated therein.

2. The electrolyte injection apparatus (600) of claim 1, wherein the electrolyte injection apparatus (600) has a spherical shape or a quadrangular pole shape in a cross sectional view.

3. The electrolyte injection apparatus (600) of one of claims 1 or 2, wherein the self-healing material comprises at least one of gelatin, polydisulfide, poly(ε-caprolactone), and shape memory polymer (SMP).

4. A secondary battery comprising:
an electrode assembly (30, 40);
a case (10, 51, 200) accommodating the electrode assembly (30, 40);
a cap plate (61, 310) connected to the case (10, 51, 200);
one of the case (10, 51, 200) and the cap plate (61, 310) having an electrolyte injection hole (500) for injection of an electrolyte; and
an electrolyte injection apparatus (600) disposed at the electrolyte injection hole (500) to seal the injection hole (500),comprising a self-healing material configured to autonomously close a pore in the self-healing material after the pore was generated therein.

5. The secondary battery of claim 4, wherein the electrolyte injection apparatus (600) has a spherical shape or a quadrangular pole shape in a cross sectional view.

6. The secondary battery of claim 4, wherein the electrolyte injection hole (500) has a form in which the electrolyte injection hole (500) comprises an uneven part in a cross sectional view.

7. The secondary battery of one of claims 4 to 6, wherein the self-healing material comprises or consist of a polymer selected from at least one of the group comprising: gelatin, polydisulfide, poly(ε-caprolactone), and shape memory polymer (SMP).

8. The secondary battery of one of claims 4 to 7, wherein:
the electrolyte injection hole (500) is formed in the cap plate (61,310) at a top of the secondary battery, and
the electrolyte injection apparatus (600) is installed at the electrolyte injection hole (500) formed in the cap plate (61,310).

9. The secondary battery of one of claims 4 to 7, wherein:
the case (10, 51, 200) comprising a bottom part (11);
the electrolyte injection hole (500) is formed at the bottom part (11) of the case (10, 51, 200), and
the electrolyte injection apparatus (600) is installed at the electrolyte injection hole (500) formed at the bottom part (11) of the case (10, 51, 200).

10. The secondary battery of one of claims 4 to 9, wherein the secondary battery has a cylindrical shape or a prismatic shape.

11. A method of manufacturing a secondary battery, the method comprising:
providing an electrode assembly (30,40);
providing a case (10, 51, 200) and accommodating the electrode assembly (30,40) in the case (10, 51, 200);
providing a cap plate (61, 310) and connecting the cap plate (61, 310) to the case (10, 51, 200);
forming an electrolyte injection hole (500) in the case (10, 51, 200) or the cap plate (61, 310); and
disposing an electrolyte injection apparatus (600) at the electrolyte injection hole (500), wherein the electrolyte injection apparatus (600) comprises a self-healing material configured to autonomously close a pore in the self-healing material after the pore was generated.

12. The method of claim 11, wherein:
the forming of the electrolyte injection hole (500) comprises forming the electrolyte injection hole (500) at a bottom part (11) of the case (10, 51, 200), and
the disposing of the electrolyte injection apparatus (600) comprises disposing the electrolyte injection apparatus (600) at the electrolyte injection hole (500) formed at the bottom part (11) of the case (10, 51, 200).

13. The method of one of claims 11 or 12, wherein the disposing of the electrolyte injection apparatus (600) comprises disposing the electrolyte injection apparatus (600) by attaching the electrolyte injection apparatus to the electrolyte injection hole (500).

14. The method of one of claims 11 or 12, wherein the disposing of the electrolyte injection apparatus (600) comprises disposing the electrolyte injection apparatus by forming the electrolyte injection apparatus at the electrolyte injection hole (500) through insert injection.

15. The method of one of claims 11 to 14, further comprising:
injecting an electrolyte into the electrolyte injection hole (500) by inserting a needle (700) for injecting the electrolyte into the electrolyte injection hole (500), and then removing the needle (700).
